# EUROPEAN PATENT SPECIFICATION

(11) **EP 1 142 635 B1**
(45) Date of publication and mention of the grant of the patent: **03.12.2003**
(21) Application number: 01202035.0
(22) Date of filing: 30.07.1998
(51) Int. Cl.: B01J 21/04, B01D 53/86, B01J 35/04, B01J 35/06, B01J 37/02, B01J 37/06

(54) **Supported deodorizing catalysts and preparation thereof**
Geträgerter Desodorisierungskatalysator und deren Herstellung
Catalyseurs supportés pour la désodorisation et méthode pour leur préparation

(30) Priority: 17.10.1997 JP 30369897; 20.10.1997 JP 30494197; 08.04.1998 JP 9625498
(43) Date of publication of application: 10.10.2001
(62) Divisional of application: 98306104.5
(73) Proprietor: Nikki-Universal Co., Ltd., Chiyoda-ku, Tokyo (JP)
(72) Inventor: Akiyama, Kazuya, Hiratsuka-shi, Kanagawa-ken (JP); Sakura, Makoto, Hiratsuka-shi, Kanagawa-ken (JP); Teramoto, Sayuri, Hiratsuka-shi, Kanagawa-ken (JP)
(74) Representative: W.P. Thompson & Co.

(56) References cited:
- EP-A- 0 479 159

## Description

This invention relates to an improved aluminium-supported catalyst with upgraded adhesion between the carrier and a catalyst layer of the catalytic material supported thereon. The invention further relates to processes for producing such supported catalysts.

With a view to purifying malodorous and deleterious gases by removing therefrom various substances (hereinafter collectively referred to as "odor components") that are composed of e.g. oxides of sulphur (SOx), nitrogen compounds such as oxides of nitrogen (NOx), ammonia and amines, alcohols, aldehydes, organic acids such as acetic acid and sulfur compounds such as hydrogen sulfide, mercaptan, dimethyl sulfide and dimethyl disulfide in atmospheric air, there have so far been developed many techniques and methods that rely upon the use of adsorbents, e.g. porous ceramics such as activated alumina and silica gel, zeolites, activated carbon and the like.

Conventional deodorizing filters have been prepared by having deodorizing catalysts supported on porous ceramic or zeolite carriers capable of adsorbing odor components. The capability of such filters is not limited to decomposition of the odor components in the objectionable gases of interest by means of the deodorizing catalyst; due to the large pore volumes in the carrier, the odor components and the reaction products resulting from the catalytic deodorization can be effectively adsorbed thereon or stored therein to thereby abate the odor components. However, the odor components and the reaction products that have been adsorbed thereon or stored therein are so sensitive to changes in environmental factors such as temperature and humidity that they are liable to desorb from the deodorizing filter to thereby give off an unpleasant smell.

Aluminum honeycomb structures have good weathering properties and high durability, and their walls can be made very thin; hence, the pressure drop that will develop in the structure is sufficiently reduced to make them suitable for use as catalyst supports in high-volume processing operations.

According to Unexamined Japanese Utility Model Public Disclosure Nos: 21736/1989 and 87235/1990, as well as Japanese Patent Public Disclosure Nos: 303518/1990 and 303523/1990, aluminium foil honeycomb structures in which the cell separating walls in the filter are made thin enough to reduce the pressure drop across the filter can be applied to ozone decomposing catalysts. However, none of these patents teach or suggest the applicability of the structures to deodorizing catalysts on the basis of the fact that aluminium foils are substantially incapable of adsorbing odor components.

Compared to porous ceramics, aluminium carriers are low in water content and have a smooth surface. These have presented a problem in that if a catalyst layer is supported on the aluminium carrier, the insufficient strength of support often contributes to the separation of the catalyst layer therefrom under external stresses such as mechanical distortions and vibrations.

An object, therefore, of the present invention is to provide a novel supported catalyst.

According to the present invention there is provided a supported catalyst having a deodorizing catalytic material supported on an aluminium carrier, the catalyst being manufactured by leaching an aluminium component from the aluminium carrier such that leached aluminium component is incorporated and precipitated into the catalyst layer.

Accordingly, the present invention relates to an aluminium supported catalyst characterised in that an aluminium component dissolving out from an aluminium carrier has been incorporated and precipitated in the catalyst layer supported thereon so as that the aluminium carrier has become integral with the catalyst layer.

The present invention further provides a process for producing the stated aluminium-supported catalyst by immersing an aluminium carrier supporting a catalyst layer thereon in a weak alkaline aqueous solution.

An advantage which may be achieved by the present invention is that a novel aluminium supported catalyst is improved in the strength of adhesion between an aluminium carrier and a catalyst layer supported thereon.

The present inventors conducted intensive studies in order to improve the strength of adhesion between an aluminium carrier and the catalyst layer. As a result, it was found that when the aluminium carrier supporting the catalyst layer was immersed in a weak alkaline aqueous solution, an aluminium component was dissolving out from the aluminium carrier, and incorporated and precipitated in the catalyst layer so as that the aluminium carrier became integral with the catalyst layer to achieve a marked improvement in the strength of adhesion between the aluminium carrier and the catalyst layer, thus making it difficult for the catalyst layer to separate from the aluminium carrier. The present invention has been accomplished on the basis of this finding.
Figure 1 is an electron micrograph showing a crystalline structure of the surface of the aluminium foil-supported catalyst Y that was prepared in Comparative Example 1 without treatment by immersing in water;
Figure 2 is an electron micrograph showing a crystalline structure of the surface of the improved aluminium foil-supported Catalyst A that was prepared in Example 1 of the present invention.

If the catalytic material is to be used for deodorizing or ozone decomposition, platinum group elements such as platinum, palladium, osmium, iridium and rhodium, iron group elements such as iron, cobalt and nickel, elements of group I such as copper and silver, elements of group VII such as manganese and rare earth metals such as cerium and lanthanum may be used as catalytic materials either independently or in appropriate combinations in either an elementary, oxide or complex form. Hopcalite which is a complex of manganese and copper can be used as a preferred deodorizing catalytic material.

The catalytic material is generally supported on the carrier in an amount of 0.1 - 50 grams per litre, preferably 0.5 - 30 grams per litre. In the case that the supported catalyst is to be used as a deodorizer, if the catalytic material is supported in an amount of less than 0.1 gram per litre, it may fail to exhibit the desired deodorizing performance. If more than 50 grams per litre of the catalytic material is supported, the supported catalytic will adsorb by itself the odor components that has to be removed or decomposed and the deodorizing filter will give off an unpleasant odor.

According to the invention, a catalyst layer of the catalytic material is supported on an aluminium carrier. According to the invention, the aluminium-supported catalyst is manufactured by leaching an aluminium component from the aluminium carrier such that leached aluminium component is incorporated and precipitated into the catalyst layer so as to form a unitary body integral with the aluminium carrier and the catalyst layer as described hereinafter. Specifically, a catalyst layer of the catalytic material is supported on an aluminium carrier; after drying, the dried aluminium-supported catalyst is immersed in a weak alkaline aqueous solution, if the pH ofthe alkaline aqueous solution is adjusted between 7 and 10, preferably between 8.5 and 9.5, aluminium on the surface of the aluminium carrier will react with the alkali in the aqueous solution very slowly, thereby causing an aluminium component such as aluminium hydroxide to leach out. The leached aluminium component is incorporated in to the catalyst layer supported thereon and precipitated in its interstices to become integral with it; in this way, the catalyst layer is firmly fixed and secured to the aluminium carrier, thereby achieving a marked improvement in the strength of support of the catalyst layer thereon.

If the dipping process is performed in a strong alkaline aqueous solution, the aluminium carrier will give hydrogen gas from the surface of the carrier as it reacts with the alkali so violently that the catalyst layer will separate from the carrier. Hopcalite which is a complex oxide of copper and manganese is an effective catalytic component for deodorizing or ozone decomposition. Since Hopcalite contains 1 - 4% of potassium, the aluminium carrier supporting it needs only to be dipped in water so that the contained potassium will dissolve out therefrom to provide the desired pH.

The dipping time depends largely upon the pH of the alkaline aqueous solution and the required volume of treatment with the supported catalyst; it ranges generally from 5 to 48 hours, preferably from 5 to 24 hours. If the dipping time is unduly prolonged, the surface of the catalyst layer will be covered with the precipitated aluminium hydroxide; this is effective for increasing the strength of support but, on the other hand, the catalytic activity may occasionally be reduced.

The following working and comparative examples as well as tests are provided for the purpose of further illustrating the present invention but are in no way to be taken as limiting.

### Comparative Example 1

Ion-exchanged water (778 g) was mixed with 830 g of an alumina sol (ALUMINA SOL 200, the trade name of Nissan Chemical Industries, Ltd.). Thereafter, 1000 g of Hopcalite (N-840, the trade name of Nissan Girdler Catalyst Co. Ltd., containing 20.5 wt.% CuO, 54.4 wt.% MnO and 2.6 wt.%K) was added and the mixture was stirred to prepare a slurry solution. The slurry solution was sprayed over a honeycomb carrier (product of Oji Kenzai Kogyo K.K.; 54.25 cells/cm² (350 cells/in²); 35.5 mm x 69 mm x 10 mm) which was fabricated by expanding a laminate of 15-µm thick aluminium foils. The excess slurry solution was blown off with a jet of air and the assembly was dried at a temperature of 150°C for 1 hour to prepare aluminium foil honeycomb-supported Catalyst Y having 27.3 g of Hopcalite and 2.7 g of alumina supported per litre of the catalyst.

### Example 1

A portion (300 mL) of the aluminium foil honeycomb-supported Catalyst Y prepared in Comparative Example 1 was immersed in 200 mL of water for 24 hours. The catalyst was recovered from the water and dried at a temperature of 150°C for 1 hour to prepare the aluminium foil honeycomb-supported Catalyst A which was an improved version of the aluminium foil honeycomb-supported Catalyst Y. After the immersion treatment, water had a pH of 9.27. The improved aluminium foil honeycomb-supported Catalyst A was found to be 1.05 g heavier than the Catalyst Y of Comparative Example 1 which was not treated by immersing in water. This was probably because part of the surface of the aluminium carrier reacted with the alkali in the water to become a water-soluble aluminium component such as aluminium hydroxide.

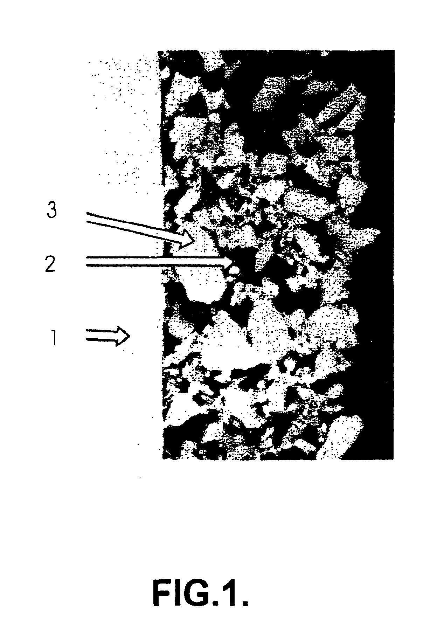

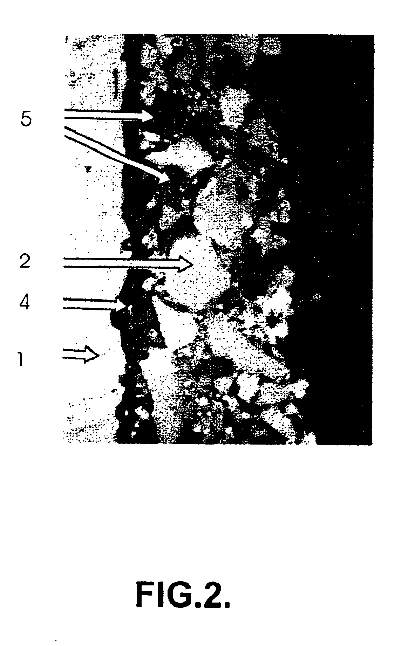

The aluminium foil honeycomb-supported Catalyst Y of Comparative Example 1 and the Catalyst A of Example 1 which was improved according to the invention were examined for a cross section of their surface portion of the catalyst under an electron microscope at a magnification of 200 and the results are shown as photomicrographs in Figures 1 and 2, respectively. The electron microscope was a SEM of JEOL LTD. operated at an acceleration voltage of 20 kV.

Figure 1 obviously shows that the aluminium carrier 1 of the Catalyst Y supported the catalyst layer 2 containing a number of interstices 3. According to Figure 2, the surface of the aluminium carrier 1 in the improved Catalyst A was eroded by immersing in the weak alkaline aqueous solution, whereupon part of its surface changed to an aluminium component such as aluminium hydroxide which, in turn, dissolved out, causing a coarse surface 4 to form; the catalyst layer 2 had void 3, into which the aluminium component 5 such as aluminium hydroxide was incorporated and precipitated, thereby causing to form a unitary body integral with the catalyst layer 2 and the aluminium carrier 1. Analysis by X-ray diffraction verified that the precipitate in the voids 3 was an aluminium-containing component.

### Test 1

Samples of supported catalyst each cut to a cube of 10 mm on each side were dropped three times on a test table from a height of 80 cm. The weight of each sample was measured after the drop test and the amount of separation of the catalyst layer was determined on the basis of the difference from the initial weight. The results are shown in Table 1 below.

**Table 1**

| **Supported Catalyst** | **Amount of Separation. mg** |
|---|---|
| Improved aluminium foil honeycomb-supported Catalyst A of Example 1 | 0 |
| | |
| Aluminium foil honeycomb-supported Catalyst Y of Comparative Example 1 | 38 |

As is clear from Table 1, the improved Catalyst A of Example 1 experienced a much smaller separation of the catalyst layer than the Catalyst Y of Comparative Example 1 which was not treated by immersing in water. This provides a support of the fact that the aluminium-supported catalyst of the invention which was characterised by integration of the aluminium component such as aluminium hydroxide from the aluminium carrier into the supported catalyst layer has a sufficient strength of support to secure resistance against separation of the supported catalyst layer.

### Industrial Applicability

If an aluminium supported catalyst is dipped in a weak alkaline aqueous solution, an aluminium component such as aluminium hydroxide leaching out of the aluminium carrier is incorporated and precipitated into the interstices in the catalyst layer which hence form a unitary body integrated with the aluminium carrier and the catalyst layer. The strength of support of the catalyst layer against the aluminium carrier is accordingly enhanced to provide an improved aluminium-supported catalyst in which the catalyst layer supported thereon will not readily separate from the aluminium carrier.

## Claims

1. A supported catalyst having a deodorizing catalytic material supported on an aluminium carrier, the catalyst being manufactured by leaching an aluminium component from the aluminium carrier such that leached aluminium component is incorporated and precipitated into the catalyst layer.

2. A supported catalyst according to claim 1 wherein the leached aluminium component is integral with the catalyst layer.

3. A supported catalyst according to claim 1 or 2 wherein the carrier has a shape selected from the group consisting of a honeycomb, a corrugation, a plate, a foil, a screen or wool.

4. A process for producing a supported catalyst according to any one of claims 1 to 3 which comprises immersing an aluminium carrier supporting a catalyst layer in a weak alkaline aqueous solution ofpH 7-10.

## Patentansprüche

1. Trägerkatalysator mit einem desodorierenden katalytischen Material getragen auf einem Aluminiumträger, wobei der Katalysator durch Auslaugen einer Aluminiumkomponente aus dem Aluminiumträger dergestalt hergestellt wird, dass die ausgelaugte Aluminiumkomponente in die Katalysatorschicht inkorporiert und präzipitiert ist.

2. Trägerkatalysator nach Anspruch 1, worin die ausgelaugte Aluminiumkomponente mit der Katalysatorschicht integriert ist.

3. Trägerkatalysator nach Anspruch 1 oder 2, worin der Träger eine Form aufweist, die aus der Gruppe ausgewählt ist, bestehend aus einer Wabe, einer Riffelung, einer Platte, einer Folie, einem Sieb oder Wolle.

4. Verfahren zum Herstellen eines Trägerkatalysators nach einem der Ansprüche 1 bis 3, welches das Eintauchen eines Aluminiumträgers, der eine Katalysatorschicht trägt, in eine schwache alkalische wässrige Lösung mit einem pH von 7 - 10 umfasst.

## Revendications

1. Catalyseur supporté ayant un matériau catalytique désodorisant supporté sur un véhicule en aluminium, le catalyseur étant fabriqué par la lixiviation d'un composant en aluminium à partir du véhicule en aluminium, de sorte que le composant en aluminium lixivié soit incorporé et précipité dans la couche de catalyseur.

2. Catalyseur supporté selon la revendication 1, dans lequel le composant en aluminium lixivié fait partie intégrante de la couche de catalyseur.

3. Catalyseur supporté selon la revendication 1 ou 2, dans lequel le véhicule a une forme choisie parmi le groupe constitué par un nid d'abeilles, une ondulation, une plaque, une feuille, un écran ou de la laine.

4. Procédé de production d'un catalyseur supporté selon l'une quelconque des revendications 1 à 3, comprenant l'immersion d'un véhicule en aluminium supportant une couche de catalyseur dans une solution aqueuse faiblement alcaline de pH 7-10.
